(19) Europäisches Patentamt
European Patent Office
Office européen des brevets

(11) **EP 1 717 829 A2**

(12) **EUROPEAN PATENT APPLICATION**

(43) Date of publication:
**02.11.2006 Bulletin 2006/44**

(51) Int Cl.:
***H01G 4/12*** *(2006.01)*

(21) Application number: **06008787.1**

(22) Date of filing: **27.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.04.2005 JP 2005133079**
**28.04.2005 JP 2005133083**

(71) Applicant: **TDK Corporation**
**Tokyo 103-8272 (JP)**

(72) Inventors:
• **Murosawa, Takako**
**Tokyo 103-8272 (JP)**
• **Miyauchi, Mari**
**Tokyo 103-8272 (JP)**
• **Noguchi, Kazunori**
**Tokyo 103-8272 (JP)**
• **Sato, Akira**
**Tokyo 103-8272 (JP)**

(74) Representative: **Vossius & Partner**
**Siebertstrasse 4**
**81675 München (DE)**

(54) **Method of production of multilayer ceramic capacitor**

(57)    A method of production of a multilayer ceramic electronic device having internal electrode layers and dielectric layers having thicknesses of less than 2 $\mu$m, having a step of firing a stack formed using a dielectric layer paste including a dielectric paste dielectric material and an internal electrode layer paste including a sintering inhibiting dielectric material, the dielectric paste dielectric material including a main ingredient material and sub ingredient material, the sintering inhibiting dielectric material in the internal electrode paste including at least a sintering inhibiting main ingredient material, the sintering inhibiting main ingredient material being substantially the same in composition as the main ingredient material included in the dielectric paste dielectric material and having a lattice constant over 3.991$\overset{\circ}{A}$ and less than 4.064$\overset{\circ}{A}$ .

FIG.1

**Description**

The present invention relates to a method of production of a multilayer ceramic capacitor or other multilayer ceramic electronic device.

One example of a multilayer ceramic electronic device, a multilayer ceramic capacitor, is comprised of a device body of a structure of a plurality of dielectric layers and internal electrode layers alternately stacked and a pair of external terminal electrodes formed on the two ends of the device body. This multilayer ceramic capacitor is produced by, first, alternately stacking pre-firing dielectric layers and pre-firing internal electrode layers to produce a pre-firing device body, firing the stack, then forming the two ends of the fired device body with terminal electrodes.

When producing a multilayer ceramic capacitor, the pre-firing dielectric layers and pre-firing internal electrode layers are co-fired. For this reason, the conductive material included in the pre-firing internal electrode layers are required to have a higher melting point that the dielectric material powder included in the pre-firing dielectric layers, not to react with the dielectric material powder, and not to diffuse in the fired dielectric layers.

In recent years, to satisfy these demands, as the conductive material included in the pre-firing internal electrode layers, the conventionally used Pt or Pd or other precious metals have been replaced by materials developed using Ag-Pd alloys or using Ni or other inexpensive base metals.

The case of using Ni for the conductive material included in the pre-firing internal electrode layers will be illustrated here. Ni has a lower melting point compared with the dielectric material powder included in the pre-firing dielectric layers. For this reason, when co-firing pre-firing dielectric layers and pre-firing internal electrode layers including Ni, the difference in sintering start temperatures between the dielectric material powder and Ni causes the Ni particles to become larger along with the progress in sintering of the dielectric material powder and finally causes the internal electrode layers to disconnect.

Therefore, in order to inhibit disconnection or inhibit sintering due to this type of firing, the technology has been proposed of adding a dielectric material as a sintering inhibitor in the internal electrode layer paste for forming the internal electrode layers (see Japanese Patent Publication (A) No. 5-62855, Japanese Patent Publication (A) No. 2000-277369, Japanese Patent Publication (A) No. 2001-307939, Japanese Patent Publication (A) No. 2003-77761, and Japanese Patent Publication (A) No. 2003-100544). This sintering inhibiting dielectric material has the property of diffusing from the internal electrode layer side to the interlayer dielectric layer side when co-firing the pre-firing interlayer dielectric layers and pre-firing internal electrode layers.

However, in recent years, the reduction in size of various types of electronic equipment has led to demands for reduction of the size, increase of the capacity, reduction of the price, and improvement of the reliability of the multilayer ceramic capacitors mounted inside such electronic equipment. To answer these demands, the fired internal electrode layers are being made thinner and the fired interlayer dielectric layers arranged between these fired internal electrode layers are being made thinner. Specifically, the baked thickness of each fired interlayer dielectric layer has been reduced to around 1 $\mu$m. Along with this, the pre-firing thickness of each pre-firing interlayer dielectric layer is also being reduced.

Along with the reduction in the thickness of the pre-firing interlayer dielectric layers, the content of the dielectric material in each dielectric layer for forming this has become smaller.

For example, consider the case of preparing an internal electrode layer paste in which a sintering inhibiting dielectric material is added in a predetermined weight ratio with respect to the conductive material Ni and coating this internal electrode layer paste to a predetermined thickness on a plurality of pre-firing interlayer dielectric layers stepwisely reduced in pre-firing thickness. At this time, the weight ratio of the content of the sintering inhibiting dielectric material in the internal electrode layers with respect to the content of the dielectric material in the pre-firing interlayer dielectric layers (content of sintering inhibiting dielectric material in internal electrode layers/content of dielectric material in pre-firing interlayer dielectric layers) stepwisely increases as the pre-firing interlayer dielectric layers become thinner. The reason is that as the pre-firing interlayer dielectric layers become thinner, the content of the dielectric material in the pre-firing interlayer dielectric layers is reduced, the denominator in the formula of the weight ratio becomes smaller, and as a result the weight ratio increases in value.

Considering this from the aspect of the pre-firing interlayer dielectric layers, this means that the smaller the thickness, the relatively greater the amount of sintering inhibiting dielectric material diffused from the internal electrode layer side. That is, the amount of relative diffusion from the internal electrode layer side to the interlayer dielectric layer side increases.

Further, along with the reduction of thickness of the pre-firing interlayer dielectric layers, reduction of thickness of the pre-firing internal electrode layers is also being sought, but to reduce the thickness of the pre-firing internal electrode layers, it is necessary to increase the fineness of the Ni or other conductive material in the internal electrode layer paste for forming them and the sintering inhibiting dielectric material.

However, at the time of firing, if the sintering inhibiting dielectric material diffusing from the internal electrode layer side to the interlayer dielectric layer side is increased in fineness, particle growth of the dielectric particles forming the interlayer dielectric layers is promoted and the microstructure of the interlayer dielectric layers is affected. If the amount of diffusion of the sintering inhibiting dielectric material from the internal electrode layer side to the interlayer dielectric layer side increases, this is even more the case. If the fired interlayer dielectric layers are made a thickness or 2.0 μm or more, the effects on the microstructure can be ignored, but if the fired interlayer dielectric layers are made a thickness of less than 2.0 μm, the effect on the microstructure becomes greater. Along with the effects on the microstructure, the obtained multilayer ceramic capacitor is liable to drop in bias characteristics or reliability or other such characteristics.

As a means for solving these problems, Japanese Patent Publication (A) No. 2003-124049 proposes technology for adjusting the composition of additives for the internal electrode layer paste. According to the technology described in this publication, it is possible to reduce the thickness of the dielectric layers without causing any deterioration of the temperature characteristics, tanδ, and life, but there is the problem that the bias characteristic is not sufficiently improved.

An object of the present invention is to provide a method of production of a multilayer ceramic capacitor or other multilayer ceramic electronic device improved in TC bias characteristic while maintaining various types of electrical characteristics, particularly a sufficient dielectric constant, even when reducing the thickness of the interlayer dielectric layers.

To achieve the above object, according to the first aspect of the present invention, there is provided a method of production of a multilayer ceramic electronic device having internal electrode layers and dielectric layers having thicknesses of less than 2 μm, the method of production of a multilayer ceramic electronic device having a step of firing a stack formed using a dielectric layer paste including a dielectric paste dielectric material and an internal electrode layer paste including a sintering inhibiting dielectric material, the dielectric paste dielectric material including a main ingredient material and sub ingredient material, the sintering inhibiting dielectric material including at least a sintering inhibiting main ingredient material, the sintering inhibiting main ingredient material being substantially the same in composition as the main ingredient material included in the dielectric paste dielectric material and having a lattice constant over 3.991Å and less than 4.064Å.

Preferably, the sintering inhibiting main ingredient material has an amount of OH group release of over 10 to less than 266.

According to a second aspect of the present invention, there is provided a method of production of a multilayer ceramic electronic device having internal electrode layers and dielectric layers having thicknesses of less than 2 μm, the method of production of a multilayer ceramic electronic device having a step of firing a stack formed using a dielectric layer paste including a dielectric paste dielectric material and an internal electrode layer paste including a sintering inhibiting dielectric material, the dielectric paste dielectric material including a main ingredient material and sub ingredient material, the sintering inhibiting dielectric material including at least a sintering inhibiting main ingredient material, and the sintering inhibiting main ingredient material being substantially the same in composition as the main ingredient material included in the dielectric paste dielectric material and having an amount of OH group release of over 10 to less than 266.

Preferably, the sintering inhibiting main ingredient material has a lattice constant of over 3.991Å to less than 4.064Å.

According to a third aspect of the present invention, there is provided a method of production of a multilayer ceramic electronic device having internal electrode layers and dielectric layers having thicknesses of less than 2 μm, the method of production of a multilayer ceramic electronic device having a step of firing a stack formed using a dielectric layer paste including a dielectric paste dielectric material and an internal electrode layer paste including a sintering inhibiting dielectric material, the dielectric paste dielectric material including a main ingredient material and sub ingredient material, the sintering inhibiting dielectric material including at least a sintering inhibiting main ingredient material, and the sintering inhibiting main ingredient material being substantially the same in composition as the main ingredient material included in the dielectric paste dielectric material and having a lattice constant of over 3.991Å to less than 4.064Å and an amount of OH group release of over 10 to less than 266.

The "substantially the same in composition" in the present invention includes not only the case where the types of the elements and the molar ratios of the elements completely match, but also the case where the types of the elements are the same, but the molar ratios are somewhat different. As the former case, for example, there is the case where when the main ingredient material included in the dielectric paste dielectric material in the dielectric layer paste is $(BaO)_m TiO_2$ (where m=1), the sintering inhibiting main ingredient material included in the sintering inhibiting dielectric material in the internal electrode layer paste is $(BaO)_{m'} \cdot TiO_2$ (where m'=1). As the latter case, for example, there is the case where when the main ingredient material is $(BaO)_m TiO_2$ (where m=1), the sintering inhibiting main ingredient material is $(BaO)_{m'} \cdot TiO_2$ (where m'=0.990 to 1.050 or so).

Preferably, the main ingredient material is a dielectric oxide of the formula $(AO)_m \cdot BO_2$ wherein the symbol A in the formula is at least one element selected from Sr, Ca, and Ba, the symbol B is at least one element of Ti and Zr, and a molar ratio m is m=0.990 to 1.035. More preferably, the main ingredient material is barium titanate of the formula $(BaO)_m \cdot TiO_2$ wherein the molar ratio m in the formula is m=0.990 to 1.035.

Preferably, the sintering inhibiting main ingredient material is a dielectric oxide of the formula $(AO)_m \cdot BO_2$

wherein the symbol A in the formula is at least one element selected from Sr, Ca, and Ba, the symbol B is at least one element of Ti and Zr, and a molar ratio m' is 0.993<m'<1.050. More preferably, the sintering inhibiting main ingredient material is barium titanate of the formula $(BaO)_{m'} \cdot TiO_2$ wherein the molar ratio m' is 0.993<m'<1.050.

The sintering inhibiting dielectric material used in the method of the present invention may include "at least a sintering inhibiting main ingredient material" and may further include a sintering inhibiting sub ingredient material. The sintering inhibiting sub ingredient material in this case may be the same or different from the composition of the sub ingredient material included in the dielectric paste dielectric material in the dielectric layer paste.

In the present invention, at least, the sintering inhibiting main ingredient material included in the sintering inhibiting dielectric material and the main ingredient material included in the dielectric paste dielectric material in the dielectric layer paste may be substantially the same compositions. Therefore, when the sintering inhibiting dielectric material includes a sintering inhibiting sub ingredient material in addition to the sintering inhibiting main ingredient material, just the sintering inhibiting main ingredient material forming part of the sintering inhibiting dielectric material need be substantially the same in composition as the main ingredient material included in the dielectric paste dielectric material in the dielectric layer paste. In other words, the sintering inhibiting sub ingredient material forming the remainder of the sintering inhibiting dielectric material may be different in composition from the composition of the sub ingredient material included in the dielectric paste dielectric material in the dielectric layer paste. Alternatively, the entire sintering inhibiting dielectric material (naturally including the sintering inhibiting main ingredient material) may be substantially the same in composition as the entire dielectric paste dielectric material in the dielectric layer paste (naturally including the main ingredient material).

The material forming the internal electrode layers of the multilayer ceramic capacitor is not particularly limited in the present invention, but in addition to a base metal, a precious metal may also be used. When forming the internal electrode layers by a base metal, the dielectric layers will sometimes contain, in addition to the barium titanate and other main ingredients, a sub ingredient including at least one type of an oxide of Mn, Cr, Si, Ca, Ba, Mg, V, W, Ta, Nb, and R (R is at least one type of Y or another rare earth element), compounds forming these oxides by firing, etc. By including the sub ingredient, no semiconductor will be formed even if firing under a reducing atmosphere and the characteristics of a capacitor can be maintained. When producing a multilayer ceramic capacitor having dielectric layers including not only a main ingredient, but also a sub ingredient in this way, the dielectric paste dielectric material included in the dielectric layer paste includes a main ingredient material or sub ingredient material forming the main ingredient or sub ingredient upon firing. In this case, as explained above, the sintering inhibiting dielectric material included in the internal electrode layer paste contains a sintering inhibiting sub ingredient material in addition to the sintering inhibiting main ingredient material.

Preferably, the dielectric layers include a main ingredient comprised of barium titanate of the formula $(BaO)_m \cdot TiO_2$ wherein the molar ratio m is m=0.990 to 1.035 and a sub ingredient comprised of magnesium oxide and an oxide of a rare earth element and further include another sub ingredient comprised of at least one type of compound selected from barium oxide and calcium oxide and at least one compound selected from silicon oxide, manganese oxide, vanadium oxide, and molybdenum oxide.

At this time, the sintering inhibiting dielectric material included in the internal electrode layer paste preferably includes a sintering inhibiting main ingredient material comprised of barium titanate of the formula $(BaO)_{m'} \cdot TiO_2$ wherein the molar ratio m' is 0.993<m'<1.050 and having a lattice constant of over 3.991Å to less than 4.064Å and/or an amount of OH group release of over 10 to less than 266, includes a sintering inhibiting sub ingredient material comprised of magnesium oxide (including a compound forming magnesium oxide) and an oxide of a rare earth element, and further includes another sub ingredient comprised of at least one type of compound selected from barium oxide (including a compound forming barium oxide) and calcium oxide (including a compound forming calcium oxide) and at least one type of compound selected from silicon oxide, manganese oxide (including a compound forming manganese oxide), vanadium oxide, and molybdenum oxide.

According to the first to third aspects of the present invention, the sintering inhibiting main ingredient material included in the sintering inhibiting dielectric material in the internal electrode layer paste is controlled in composition (for example, so-called "A/B", that is, molar ratio m' of the A site (part of "(BaO)" in the formula) and B site (part of "$TiO_2$" in the formula), lattice constant, and amount of OH group release. By using barium titanate controlled in various types of conditions in this way as the sintering inhibiting main ingredient material, the state of the dielectric particles forming the fired interlayer dielectric layers is suitably controlled. As a result, even if the interlayer dielectric layers are reduced in thickness to less than 2 μm, the TC bias characteristic is more preferably improved while maintaining the various types of electrical characteristics, particularly a sufficient dielectric constant. More specifically, the multilayer ceramic electronic device obtained by the method of the present invention has a TC bias characteristic, measured in a thermostatic tank held at 85°C by a 120Hz, 0.5 Vrms, and 2V/μm bias voltage, with a rate of change of capacitance of -25% or more, preferably -20% or more from the value measured at 20°C without application of a bias voltage.

According to a fourth aspect of the invention, there is provided a method of production of a multilayer ceramic electronic device having internal electrode layers and dielectric layers having thicknesses of less than 2 μm, the method

of production of a multilayer ceramic electronic device having a step of firing a stack formed using a dielectric layer paste including a dielectric paste dielectric material and an internal electrode layer paste including a sintering inhibiting dielectric material, the dielectric paste dielectric material including a main ingredient material and sub ingredient material, the main ingredient material being a dielectric oxide of the formula $(AO)_m \cdot BO_2$ wherein the symbol A in the formula is at least one element selected from Sr, Ca, and Ba, the symbol B is at least one element of Ti and Zr, and a molar ratio m is m=0.990 to 1.035, the sintering inhibiting dielectric material including at least a sintering inhibiting main ingredient material, and the sintering inhibiting main ingredient material being a dielectric oxide of the formula $(AO)_m \cdot BO_2$ wherein the symbol A in the formula is at least one element selected from Sr, Ca, and Ba, the symbol B is at least one element of Ti and Zr, and a molar ratio m' is 0.993<m' <1. 050 and having an ignition loss of less than 6.15% and a lattice constant of over 3.998Å to less than 4.055Å.

According to a fifth aspect of the present invention, there is provided a method of production of a multilayer ceramic electronic device having internal electrode layers and dielectric layers having thicknesses of less than 2 μm, the method of production of a multilayer ceramic electronic device having a step of firing a stack formed using a dielectric layer paste including a dielectric paste dielectric material and an internal electrode layer paste including a sintering inhibiting dielectric material, the dielectric paste dielectric material including a main ingredient material and sub ingredient material, the main ingredient material being barium titanate of the formula $(BaO)_m \cdot TiO_2$ wherein the molar ratio m is m=0.990 to 1.035, the sintering inhibiting dielectric material including at least a sintering inhibiting main ingredient material, and the sintering inhibiting main ingredient material being barium titanate of the formula $(BaO)_m \cdot TiO_2$ wherein the molar ratio m' is 0. 993<m'<1.050, and having an ignition loss of less than 6.15% and a lattice constant of over 3.998Å to less than 4.055Å.

Preferably, the main ingredient material of the dielectric paste dielectric material is barium titanate of the formula $(BaO)_m \cdot TiO_2$ wherein the molar ratio m is m=0.990 to 1.035.

Preferably, the sintering inhibiting main ingredient material is barium titanate of the formula $(BaO)_m \cdot TiO_2$ wherein the molar ratio m' is 0.993<m'<1.050.

Preferably, both the main ingredient material and the sintering inhibiting main ingredient material of the dielectric paste dielectric material are barium titanate of the above formula wherein the symbol A is Ba and the symbol B is Ti.

The sintering inhibiting dielectric material used in the method of the present invention should include "at least a sintering inhibiting main ingredient material" and may further include a sintering inhibiting sub ingredient material. The sintering inhibiting sub ingredient material in this case may be the same or different from the composition of the sub ingredient material included in the dielectric paste dielectric material in the dielectric layer paste.

The material forming the internal electrode layers of the multilayer ceramic capacitor is not particularly limited in the present invention, but in addition to a base metal, a precious metal may also be used. When forming the internal electrode layers by a base metal, the dielectric layers will sometimes contain, in addition to the barium titanate and other main ingredients, a sub ingredient including at least one type of an oxide of Mn, Cr, Si, Ca, Ba, Mg, V, W, Ta, Nb, and R (R is at least one type of Y or another rare earth element), compounds forming these oxides by firing, etc. By including the sub ingredient, no semiconductor will be formed even if firing under a reducing atmosphere and the characteristics of a capacitor can be maintained. When producing a multilayer ceramic capacitor having dielectric layers including not only a main ingredient, but also a sub ingredient in this way, the dielectric paste dielectric material included in the dielectric layer paste includes a main ingredient material or sub ingredient material forming the main ingredient or sub ingredient upon firing. In this case, as explained above, the sintering inhibiting dielectric material included in the internal electrode layer paste contains a sintering inhibiting sub ingredient material in addition to the sintering inhibiting main ingredient material.

Preferably, the dielectric layers include a main ingredient comprised of barium titanate of the formula $(BaO)_m \cdot TiO_2$ wherein the molar ratio m is m=0.990 to 1.035 and a sub ingredient comprised of magnesium oxide and an oxide of a rare earth element and further include another sub ingredient comprised of at least one type of compound selected from barium oxide and calcium oxide and at least one compound selected from silicon oxide, manganese oxide, vanadium oxide, and molybdenum oxide.

At this time, the sintering inhibiting dielectric material included in the internal electrode layer paste preferably includes a sintering inhibiting main ingredient material comprised of barium titanate of the formula $(BaO)_m \cdot TiO_2$ wherein the molar ratio m' is 0.993<m'<1.050 and having an ignition loss of less than 6.15% and a lattice constant of over 3.998Å to less than 4.055Å, includes a sintering inhibiting sub ingredient material comprised of magnesium oxide (including a compound forming magnesium oxide) and an oxide of a rare earth element, and further includes another sub ingredient comprised of at least one type of compound selected from barium oxide (including a compound forming barium oxide) and calcium oxide (including a compound forming calcium oxide) and at least one type of compound selected from silicon oxide, manganese oxide (including a compound forming manganese oxide), vanadium oxide, and molybdenum oxide.

According to the fourth and fifth aspects of the present invention, the sintering inhibiting main ingredient material included in the sintering inhibiting dielectric material in the internal electrode layer paste is controlled in so-called "A/B", that is, molar ratio m' of the A site (part of "(BaO)" in the formula) and B site (part of "TiO$_2$" in the formula), ignition loss, and lattice constant. By using barium titanate controlled in various types of conditions in this way as the sintering inhibiting main ingredient material, the state of the dielectric particles forming the fired interlayer dielectric layers is suitably controlled. As a result, even if the interlayer dielectric layers are reduced in thickness to less than 2 μm, the TC bias characteristic is more preferably improved while maintaining the various types of electrical characteristics, particularly a sufficient dielectric constant. More specifically, the multilayer ceramic electronic device obtained by the method of the present invention has a TC bias characteristic, measured in a thermostatic tank held at 85°C by a 120Hz, 0.5 Vrms, and 2V/μm bias voltage, with a rate of change of capacitance of -20% or more from the value measured at 20°C without application of a bias voltage. Further, with the multilayer ceramic electronic device obtained by the method of the present invention, it is possible to improve not only the above TC bias characteristic, but also the DC breakdown voltage and short-circuit defect characteristic.

The multilayer ceramic electronic device is not particularly limited, but a multilayer ceramic capacitor, piezoelectric device, chip varistor, chip thermistor, or other surface mounted (SMD) chip type electronic device may be mentioned.

Note that in the present invention, when expressed as simply the "dielectric layers", the dielectric layers mean one or both of the interlayer dielectric layers and outside dielectric layers.

Below, the present invention will be explained based on the attached drawings, in which:

FIG. 1 is a schematic cross-sectional view of a multilayer ceramic capacitor according to an embodiment of the present invention, and
FIG. 2 is a graph showing the changes in temperatures of the binder removal, firing, and annealing in the examples of the present invention.

DESCRIPTION OF THE PREFERRED EMBODIMENTS

In the present embodiment, as the multilayer ceramic electronic device, a multilayer ceramic capacitor comprised of a plurality of internal electrode layers and interlayer dielectric layers alternately stacked and having outside dielectric layers arranged at the two outside ends of the internal electrode layers and interlayer dielectric layers in the stacking direction will be explained as an example.

(First Embodiment)

Multilayer Ceramic Capacitor

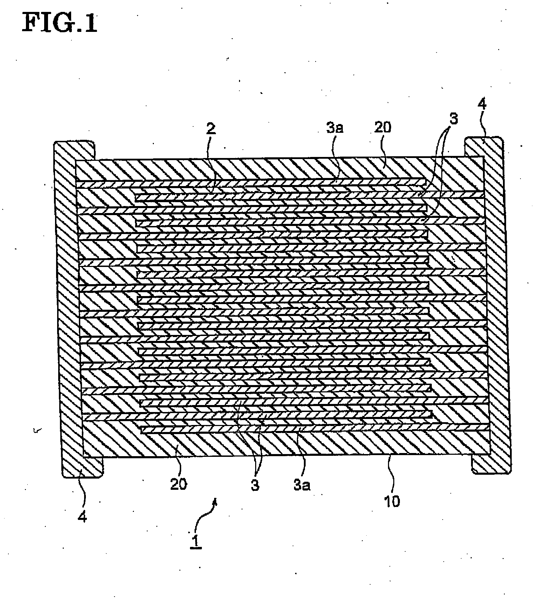

As shown in FIG. 1, a multilayer ceramic capacitor 1 according to an embodiment of the present invention has a capacitor device body 10 configured by interlayer dielectric layers 2 and internal electrode layers 3 alternately stacked. This capacitor device body 10 is formed at its two ends with a pair of external electrodes 4 connected to the internal electrode layers 3 alternately arranged inside the device body 10. The internal electrode layers 3 are stacked so that their side end faces are alternately exposed at the surfaces of the two facing ends of the capacitor device body 10. The pair of external electrodes 4 are formed at the two ends of the capacitor device body 10 and are connected to the exposed end faces of the alternately arranged internal electrode layers 3 to form a capacitor circuit.

The capacitor device body 10 is not particularly limited in shape, but usually is a parallelopiped. Further, it is not particularly limited in dimensions and may be made suitable dimensions in accordance with the application, but usually is a length of (0.4 to 5.6 mm) x width of (0.2 to 5.0 mm) x thickness of (0.2 to 1.9 mm) or so.

The two outside ends of the capacitor device body 10 in the stacking direction of the internal electrode layers 3 and interlayer dielectric layers 2 are provided with outside dielectric layers 20 to protect the insides of the device body 10.

The interlayer dielectric layers 2 and outside dielectric layers 20 are not particularly limited in composition in the present invention, but for example may be comprised of the following dielectric ceramic composition.

The dielectric ceramic composition of the present embodiment includes barium titanate of the formula (BaO)$_m$·TiO$_2$ wherein the molar ratio m is 0.990 to 1.035 as a main ingredient.

The dielectric ceramic composition of the present embodiment includes the main ingredient and also a sub ingredient. As the sub ingredient, one including at least one type of an oxide of Mn, Cr, Ca, Ba, Mg, V, W, Ta, Nb, and R (R is one type or more of Y or other rare earth element) and compounds forming these oxides upon firing may be mentioned. By adding the sub ingredient, it is possible to obtain the characteristics of a capacitor even with firing in a reducing atmosphere. Note that impurities comprised of C, F, Li, Na, K, P, S, Cl, or other trace ingredients in an amount of 0.1 wt% or less may also be included. However, in the present invention, the composition of the interlayer dielectric layers 2 and outside dielectric layers 20 is not limited to the above.

In the present embodiment, as the interlayer dielectric layers 2 and outside dielectric layers 20, ones of the following composition are preferably used. The composition includes a main ingredient comprised of barium titanate of the formula $(BaO)_m \cdot TiO_2$ wherein the molar ratio m is 0.990 to 1. 035, includes a sub ingredient comprised of magnesium oxide and an oxide of a rare earth element, and further including another sub ingredient comprised of at least one compound selected from barium oxide and calcium oxide and at least one compound selected from silicon oxide, manganese oxide, vanadium oxide, and molybdenum oxide.

Further, when converting the barium titanate to $[(BaO)_{0.990-1.035} \cdot TiO_2]$, the magnesium oxide to MgO, the oxide of the rare earth element to $R_2O_3$, the barium oxide to BaO, the calcium oxide to CaO, the silicon oxide to $SiO_2$, the manganese oxide to MnO, the vanadium oxide to $V_2O_5$, and the molybdenum oxide to $MoO_3$, the ratios with respect to $[(BaO)_{0.990-1.035} \cdot TiO_2]$ as 100 moles become as follows: That is,

MgO: 0.1 to 3 mol,

$R_2O_3$: over 0 mol to 5 mol,

BaO+CaO: 0.5 to 12 mol,

$SiO_2$: 0.5 to 12 mol,

MhO: over 0 mol to 0.5 mol,

$V_2O_5$: 0 to 0.3 mol,

$MoO_3$: 0 to 0.3 mol.

The number, thickness, and other conditions of the interlayer dielectric layers 2 may be suitably determined in accordance with the object and applications, but in the present embodiment, the interlayer dielectric layers 2 preferably have a thickness reduced to less than 2 $\mu$m, more preferably 1.5 $\mu$m or less, more preferably 1 $\mu$m or less. In the present embodiment, even if reducing the thickness of the interlayer dielectric layers 2 in this way, the capacitor 1 is improved in TC bias characteristic while maintaining various types of electrical characteristics, particularly a sufficient dielectric constant. The outside dielectric layers 20 have a thickness of for example 30 $\mu$m to several hundred $\mu$m or so.

The interlayer dielectric layers 2 and outside dielectric layers 20 are comprised of pluralities of dielectric particles and grain boundary phases formed between the adjoining pluralities of dielectric particles. The grain boundary phases usually are comprised of oxides of the materials forming the dielectric material or internal electrode material, oxides of other separately added materials, or oxides of material introduced as impurities during the processing.

The internal electrode layers 3 are substantially comprised of a conductive material of a base metal acting as electrodes. As the base metal used as the conductive material, Ni or an Ni alloy is preferred. As the Ni alloy, an alloy of Ni with at least one type of element selected from Mn, Cr, Co, Al, Ru, Rh, Ta, Re, Os, Ir, Pt, W, etc. is preferable. The Ni content in the alloy is preferably 95 wt% or more. Note that the Ni or Ni alloy may include various types of trace ingredients such as P, C, Nb, Fe, Cl, B, Li, Na, K, F, S, etc. to an extent of 0.1 wt% or less.

In the present embodiment, the internal electrode layers 3 preferably have thicknesses reduced to less than 2 $\mu$m, more preferably 1.5 $\mu$m or less.

As the external electrodes 4, usually it is possible to use at least one of Ni, Pd, Ag, Au, Cu, Pt, Rh, Ru, Ir, etc. or their alloys. Usually, Cu or a Cu alloy, Ni or an Ni alloy, etc. or Ag, an Ag-Pd alloy, an In-Ga alloy, etc. is used. The thicknesses of the external electrodes 4 may be suitably determined in accordance with the application, but usually is preferably 10 to 200 $\mu$m or so.

Method of Production of of Multilayer Ceramic Capacitor

Next, an example of the method of production of a multilayer ceramic capacitor 1 according to the present embodiment will be explained.

First, a dielectric layer paste for forming the interlayer dielectric layers 2 and outside dielectric layers 20 shown in FIG. 1 after firing and an internal electrode layer paste for forming the internal electrode layers 3 shown in FIG. 1 after firing are prepared.

Dielectric Layer Paste

The dielectric layer paste is prepared by mixing the dielectric paste dielectric material and organic vehicle.

The dielectric paste dielectric material includes a main ingredient material or sub ingredient material for forming the main ingredient or sub ingredient forming the dielectric layers 2 and 20 after firing. These ingredient materials are suitably selected from complex oxides or various types of compounds forming oxides, for example carbonates, nitrates, hydroxides, organometallic compounds, etc. and may be mixed for use.

The dielectric paste dielectric material is usually used as a powder having an average particle size of 0.4 $\mu$m or less, preferably 0.05 to 0.35 $\mu$m or so. Note that the "average particle size" here is a value found by observing a particle of the material by an SEM and converting it to a circle equivalent diameter.

The organic vehicle contains a binder and solvent. As the binder, for example, ethyl cellulose, polyvinyl butyral, an acryl resin, or other various types of binders may be used. The solvent is also not particularly limited, but terpineol, butyl carbitol, acetone, toluene, xylene, ethanol, or another organic solvent may be used.

The dielectric layer paste may be formed by kneading the dielectric paste dielectric material and a vehicle comprised of water in which a water-soluble binder is dissolved. The water-soluble binder is not particularly limited, but polyvinyl alcohol, methyl cellulose, hydroxyethyl cellulose, a water-soluble acryl resin, emulsion, etc. may be used.

The content of each ingredient in the dielectric layer paste is not particularly limited, but for example the dielectric layer paste may be prepared so as to include about 1 to about 50 wt% of the solvent.

The dielectric layer paste may also contain, in accordance with need, additives selected from various types of dispersants, plasticizers, dielectrics, sub ingredient compounds, glass frit, insulator, etc. When adding these additives to the dielectric layer paste, the total content is preferably made not more than about 10 wt%.

Internal Electrode Layer Paste

In the present embodiment, the internal electrode layer paste is prepared by kneading a conductive material, sintering inhibiting dielectric material, and organic vehicle.

As the conductive material, Ni or an Ni alloy or a mixture of these is used. This conductive material may be spherical, flake-shaped, etc. It is not particularly limited in shape. Further, materials of these shapes may be mixed. Further, when the particles of the conductive material are spherical, usually ones with an average particle size of 0.5 $\mu$m or less, preferably 0.01 to 0.4 $\mu$m or so, are used. This is so as to realize a greater reduction of thickness. The conductive material is included in the internal electrode layer paste in an amount of preferably 35 to 60 wt%.

The sintering inhibiting dielectric material acts to inhibit sintering of the internal electrodes (conductive material) in the firing process.

In the present embodiment, the sintering inhibiting dielectric material includes a sintering inhibiting main ingredient material and a sintering inhibiting sub ingredient material. In the present embodiment, at least the sintering inhibiting main ingredient material included in the sintering inhibiting dielectric material and the main ingredient material included in the dielectric paste dielectric material in the dielectric layer paste should be substantially the same in composition. Therefore, it is also possible that only the sintering inhibiting main ingredient material forming part of the sintering inhibiting dielectric material be substantially the same in composition as the main ingredient material included in the dielectric paste dielectric material in the dielectric layer paste. Further, it is also possible that the entire sintering inhibiting dielectric material be substantially the same in composition as the entire dielectric paste dielectric material in the dielectric layer paste. By making at least the sintering inhibiting main ingredient material and the main ingredient material substantially the same in composition in this way, the compositions of the dielectric layers 2 and 20 will not be changed due to diffusion from the internal electrode layers 3 to the dielectric layers 2 and 20.

In the present embodiment, as the sintering inhibiting main ingredient material, barium titanate of the formula $(BaO)_{m'} \cdot TiO_2$ wherein the molar ratio m' is 0.993<m'<1.050, preferably 0.995≤m'≤1.035, more preferably 1.000≤m'≤1.020, is used. By using barium titanate adjusted in value of m' as the sintering inhibiting main ingredient material, the presence of dielectric particles forming the fired interlayer dielectric layers 2 is controlled and even if reducing the thickness, the TC bias characteristic is improved while maintaining various types of electrical characteristics, particularly a sufficient dielectric constant. If m' becomes too large, the sintering tends to become insufficient.

In the first aspect of the present embodiment, the main ingredient material in the sintering inhibiting dielectric material used is one having a specific lattice constant. By using a main ingredient material having a specific lattice constant for inhibiting sintering, it is possible to improve various types of electrical characteristics of the finally obtained capacitor 1. The sintering inhibiting main ingredient material has a lattice constant of over 3.991Å to less than 4.064Å, preferably over 4.000Å to less than 4.057Å, more preferably 4.004Å to 4.0475Å. If the lattice constant is too small or too large, the effect of improvement of the various types of electrical characteristics tends not to be able to be obtained.

In the second aspect of the present embodiment, the main ingredient material in the sintering inhibiting dielectric material used is one having a specific amount of OH group release. By using a main ingredient material having a specific amount of OH group release for inhibiting sintering, it is possible to improve the various types of electrical characteristics of the finally obtained capacitor 1. The sintering inhibiting main ingredient material has an amount of OH group release of over 10 to less than 266, preferably 25 to 250, more preferably 25 to 150. If the amount of OH group release is too small or too large, the effect of improvement of the various types of electrical characteristics tends not to be able to be obtained.

The sintering inhibiting main ingredient material may have an average particle size the same as the particle size of the main ingredient material included in the dielectric paste dielectric material in the dielectric layer paste, but the size is preferably smaller, more preferably 0.01 to 0.2 $\mu$m, particularly preferably 0.01 to 0.15 $\mu$m. Note that it is known that the value of the average particle size is correlated with the specific surface area (SSA).

The sintering inhibiting dielectric material (there are cases of only the sintering inhibiting main ingredient material and cases including both a sintering inhibiting main ingredient material and sintering inhibiting sub ingredient material, same below unless indicated to the contrary) is not particularly limited, but for example is preferably produced through the oxalate method, hydrothermal synthesis method, sol gel method, hydrolysis method, alkoxide method, or other process. By using this method, it is possible to efficiently produce a dielectric paste dielectric material having the above lattice constant and amount of OH group release.

The sintering inhibiting dielectric material is included in the internal electrode layer paste in an amount, with respect to the conductive material, of preferably 10 to 30 wt%, more preferably 15 to 20 wt%. If the sintering inhibiting dielectric material is too small in content, the effect of inhibiting sintering of the conductive material falls, while if too great, the continuity of the internal electrodes falls. That is, if the sintering inhibiting dielectric material is too small or too large in content, trouble such as an inability to secure sufficient electrostatic capacitance of the capacitor occurs.

The organic vehicle includes a binder and solvent. As the binder, for example, ethyl cellulose, acryl resin, polyvinyl butyral, polyvinyl acetal, polyvinyl alcohol, polyolefin, polyurethane, polystyrene, or their copolymers etc. may be mentioned. The binder is contained in the internal electrode layer paste in an amount, with respect to the mixed powder of the conductive material and sintering inhibiting dielectric material, of preferably 1 to 5 wt%. If the binder is too small, the strength tends to drop, while if it is too great, the pre-firing electrode patterns drop in metal packing density. After firing, it sometimes becomes difficult to maintain the flatness of the internal electrode layers 3.

As the solvent, for example, terpineol, dehydroterpineol, butyl carbitol, kerosene, or other known solvents may be used. The solvent content is, with respect to the paste as a whole, preferably 20 to 50 wt% or so.

The internal electrode layer paste may include a plasticizer. As the plasticizer, benzyl butyl phthalate (BBP) or another phthalic acid ester, adipic acid, phosphoric acid ester, glycols, etc. may be mentioned.

Next, the dielectric layer paste and internal electrode layer paste are used to prepare a green chip. When using the printing method, the dielectric layer paste and predetermined patterns of the internal electrode layer paste are successively printed on a carrier sheet, the stack is cut to a predetermined shape, then the stack is peeled off the carrier sheet to obtain a green chip. When using the sheet method, the dielectric layer paste is formed on a carrier sheet to a predetermined thickness to form the obtained green sheet, the internal electrode layer paste is printed on this in predetermined patterns, then these are stacked to obtain a green chip.

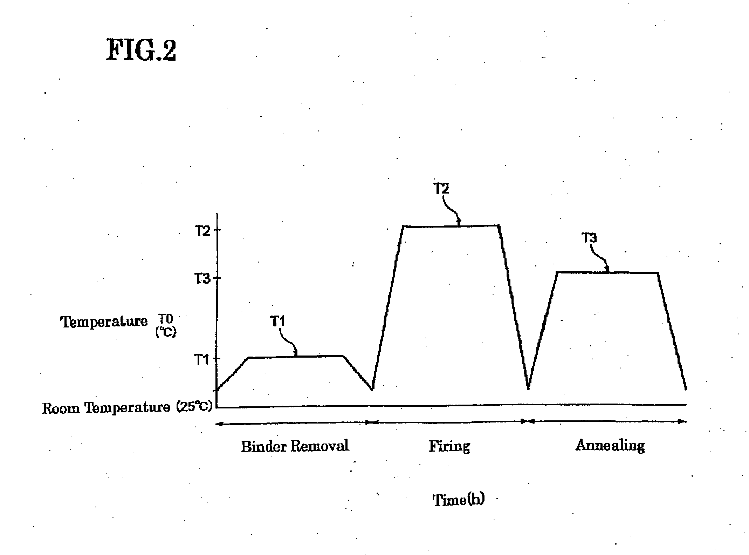

Next, the obtained green chip is treated to remove the binder. The binder removal is the process of raising the ambient temperature T0, for example as shown in FIG. 2, from for example room temperature (25°C) toward the binder removal holding temperature T1 by a predetermined rate of temperature rise, holding at the T1 for a predetermined time, then lowering the temperature by a predetermined rate of temperature reduction.

In the present embodiment, the rate of temperature rise is preferably 5 to 300°C/hour, more preferably 10 to 100°C/hour. The binder removal holding temperature T1 is preferably 200 to 400°C, more preferably 220 to 380°C. The T1 holding time is preferably 0.5 to 24 hours, more preferably 2 to 20 hours. The rate of temperature reduction is preferably 5 to 300°C/hour, more preferably 10 to 100°C/hour.

The treatment atmosphere of the binder removal is preferably the air or a reducing atmosphere. As the atmospheric gas in the reducing atmosphere, for example it is preferable to use a wet mixed gas of $N_2$ and $H_2$. The oxygen partial pressure in the treatment atmosphere is preferably $10^{-45}$ to $10^5$ Pa. If the oxygen partial pressure is too low, the binder removal effect falls, while if too high, the internal electrode layers tend to oxidize.

Next, the green chip is fired. The firing is a process of raising the ambient temperature T0, for example as shown in FIG. 2, from for example room temperature (25°C) toward the firing holding temperature T2 by a predetermined rate of temperature rise, holding at the T2 for a predetermined time, then lowering the ambient temperature by a predetermined rate of temperature reduction.

In the present embodiment, the rate of temperature rise is preferably 50 to 500°C/hour, more preferably 100 to 300°C/hour. The firing holding temperature T2 is preferably 1100 to 1350°C, more preferably 1100 to 1300°C, still more preferably 1150 to 1250°C, while the T2 holding time is preferably 0.5 to 8 hours, more preferably 1 to 3 hours. If T2 is too low, even if the T2 holding time is made longer, the densification becomes insufficient, while if it is too high, electrode disconnection due to abnormal sintering of the internal electrode layers, deterioration of the capacity-temperature characteristic due to diffusion of the conductive material forming the internal electrode layers, and reduction of the dielectric ceramic composition forming the dielectric layers occur more easily.

The rate of temperature reduction is preferably 50 to 500°C/hour, more preferably 150 to 300°C/hour, more preferably 200 to 300°C/hour. The firing atmosphere is preferably a reducing atmosphere. As the atmospheric gas in the reducing atmosphere, for example, it is preferable to use a wet mixed gas of $N_2$ and $H_2$.

The oxygen partial pressure in the firing atmosphere is preferably $6 \times 10^{-9}$ to $10^{-4}$ Pa. If the oxygen partial pressure is too low, the conductive material of the internal electrode layers abnormally sinters and will sometimes end up disconnecting, while if it is too high, the internal electrode layers tend to oxidize.

Note that binder removal, firing, and annealing may be performed consecutively or may be performed separately.

Next, when firing the green chip in a reducing atmosphere, it is preferable to then heat treat (anneal) it. The annealing is treatment for reoxidizing the dielectric layers.

The annealing is a process of raising the ambient temperature T0, for example, as shown in FIG. 2, for example from room temperature (25°C) toward the annealing holding temperature T3 by a predetermined rate of temperature rise, holding at the T3 for a predetermined time, then lowering the ambient temperature T0 by a predetermined rate of temperature reduction.

In the present embodiment, the rate of temperature rise is preferably 100 to 300°C/hour, more preferably 150 to 250°C/hour. The annealing holding temperature T3 is preferably 800 to 1100°C, more preferably 900 to 1100°C, while the T3 holding time is preferably 0 to 20 hours, more preferably 2 to 10 hours. If T3 is too low, the dielectric layers 2 insufficiently oxidize, so the IR is low and the IR life easily becomes short. If T3 is too high, not only do the internal electrode layers 3 oxidize and fall in capacity, but also the internal electrode layers 3 end up reacting with the dielectric material resulting in easy deterioration of the capacity-temperature characteristic, drop of the IR, and drop of the IR life.

The rate of temperature reduction is preferably 50 to 500°C/hour, more preferably 100 to 300°C/hour. The treatment atmosphere of the annealing is preferably a neutral atmosphere. As the atmospheric gas in the neutral atmosphere, for example, a wet $N_2$ gas is preferably used.

At the time of annealing, the temperature is raised under an $N_2$ gas atmosphere to the holding temperature T3, then the atmosphere is changed or the entire annealing process is performed in a wet $N_2$ gas atmosphere. The oxygen partial pressure in the annealing atmosphere is preferably $2 \times 10^{-4}$ to 1 Pa. If the oxygen partial pressure is too low, the reoxidation of the dielectric layers 2 become difficult, while if too high, the internal electrode layers 3 tend to oxidize.

In the present embodiment, the annealing may also be comprised of just a temperature raising process and a temperature lowering process. That is, the temperature holding time may also be made zero. In this case, the holding temperature is synonymous with the maximum temperature.

In the above-mentioned binder removal, firing, and annealing, the $N_2$ gas or mixed gas etc. may be wet using for example a wetter etc. In this case, the water temperature is preferably about 0 to 75°C or so.

Note that binder removal, firing, annealing may be performed consecutively or may be performed separately.

By the above processing, a capacitor device body 10 formed by a sintered article is formed.

Next, the obtained capacitor device body 10 is formed with external electrodes 4. The external electrodes 4 are formed by polishing the end faces of the capacitor device body 10 formed by the sintered article by for example barrel polishing, sandblasting, etc., then baking on the two end faces an external electrode paste including usually at least one type of element of Ni, Pd, Ag, Au, Cu, Pt, Rh, Ru, Ir, etc. or their alloys or by coating an In-Ga alloy or another known method. In accordance with need, the surfaces of the external electrodes 4 may be formed with covering layers by plating etc.

(Second Embodiment)

The method of the present embodiment only differs from the above-mentioned first embodiment in the following points. The rest of the configuration and the actions and effects are similar to the above. Detailed explanations will be omitted.

That is, in the method of the present embodiment, the sintering inhibiting dielectric material includes a sintering inhibiting main ingredient material and a sintering inhibiting sub ingredient material. Further, in the present embodiment, the sintering inhibiting main ingredient material used has a specific ignition loss. By using a main ingredient material having a specific ignition loss for inhibiting sintering, it is possible to effectively control the particle structure of the interlayer dielectric layers 2 and possible to improve the bias characteristic of the capacitor 1 much more. The sintering inhibiting main ingredient material has an ignition loss of less than 6.15%, preferably less than 5.0%, more preferably less than 3.5%. If the ignition loss becomes too great, the bias characteristic tends to become impossible to improve. Note that the lower limit of the ignition loss is preferably as low as possible. Ultimately, 0 (zero)% is ideal, but usually producing such a sintering inhibiting main ingredient material is difficult.

Here, the "ignition loss " means the rate of change of weight when heat treating the sintering inhibiting main ingredient material (heating from room temperature to 1200°C in the air by a rate of temperature rise of 300°C/hour and holding at this 1200°C for 10 minutes) and holding from 200°C to 1200°C for 10 minutes. The ignition loss is believed to occur due to the adsorbed ingredients or OH groups normally included in the sintering inhibiting dielectric material being lost about along with the heat treatment.

In the present embodiment, as the sintering inhibiting main ingredient material, one having a specific lattice constant is used. By using a main ingredient material having a specific lattice constant for inhibiting sintering, the interlayer dielectric layers 2 can be effectively controlled in particle structure and the capacitor 1 can be more efficiently improved in bias characteristic. The sintering inhibiting main ingredient material has a lattice constant of over 3.998Å to less than 4.055Å, preferably over 4.000Å to less than 4.040Å. If the lattice constant is too small or too large, the effect of improvement of the various types of electrical characteristics tends not to be able to be obtained.

The sintering inhibiting main ingredient material may have an average particle size the same as the particle size of the main ingredient material included in the dielectric paste dielectric material in the dielectric layer paste, but a smaller one is preferable, more preferably 0.01 to 0.2$\mu$m, particularly preferably 0.01 to 0.15 $\mu$m. Note that it is known that the value of the average particle size is correlated with the specific surface area (SSA).

The sintering inhibiting dielectric material (there are cases of only the sintering inhibiting main ingredient material and cases including both a sintering inhibiting main ingredient material and sintering inhibiting sub ingredient material, same below unless indicated to the contrary) is not particularly limited, but for example is preferably produced through the oxalate method, hydrothermal synthesis method, sol gel method, hydrolysis method, alkoxide method, or other process. By using this method, it is possible to efficiently produce a sintering inhibiting dielectric material including a sintering inhibiting main ingredient material having a specific ignition loss and lattice constant.

The sintering inhibiting dielectric material is included in the internal electrode layer paste in an amount, with respect to the conductive material, of preferably 5 to 30 wt%, more preferably 10 to 20 wt%. If the content of the sintering inhibiting dielectric material in the paste is too small, the effect of inhibiting sintering of the conductive material falls, while if too great, the continuity of the internal electrodes falls. That is, if the content of the sintering inhibiting dielectric material is too small or too great, trouble occurs such as the inability to secure a sufficient electrostatic capacity of the capacitor.

Above, embodiments of the present invention were explained, but the present invention is not limited to these embodiments in any way. Of course, the present invention can be modified in various ways within the scope of the gist of the invention.

For example, in the above-mentioned embodiments, the binder removal, firing, and annealing were performed independently, but the present invention is not limited to this. It is also possible to perform at least two processes consecutively. When performed consecutively, after binder removal, the atmosphere is changed without cooling, then the temperature is raised to the firing holding temperature T2 for firing, then cooling is performed. When reaching the annealing holding temperature T3, the atmosphere is preferably changed for annealing.

Below, the present invention will be explained in further detail using examples, but the present invention is not limited to these examples.

Example 1

Preparation of Dielectric Layer Paste

First, dielectric paste dielectric materials, a binder comprised of PVB (polyvinyl butyral) resin, a plasticizer comprised of DOP (dioctyl phthalate), and a solvent comprised of ethanol were prepared.

The dielectric paste dielectric materials were produced by preparing a plurality of main ingredient materials comprised of $BaTiO_3$ having an average particle size of about 0.2 $\mu$m, wet mixing into the $BaTiO_3$ a sub ingredient material comprised of $MnCO_3$: 0.2 mol%, MgO: 0.5 mol%, $V_2O_5$: 0.3 mol%, $Y_2O_3$: 2 mol%, $CaCO_3$: 3 mol%, $BaCO_3$: 3 mol%, and $SiO_2$: 3 mol% by a ball mill for 16 hours, then drying.

Next, 10 wt% of a binder, 5 wt% of a plasticizer, and 150 wt% of a solvent were weighed and kneaded with each dielectric paste dielectric material by a ball mill to obtain a slurry and obtain a dielectric layer paste.

Preparation of Internal Electrode Layer Paste

A conductive material comprised of Ni particles having an average particle size of 0.4 $\mu$m, sintering inhibiting dielectric materials, a binder comprised of ethyl cellulose resin, and a solvent comprised of terpineol were prepared.

The sintering inhibiting dielectric materials used were ones including sintering inhibiting main ingredient materials comprised of $BaTiO_3$ of compositions substantially the same as the dielectric paste dielectric material in the dielectric layer paste and sintering inhibiting sub ingredient materials comprised of $MnCO_3$, MgO, $V_2O_5$, $Y_2O_3$, $CaCO_3$, $BaCO_3$, and $SiO_2$. However, the sintering inhibiting main ingredient materials comprised of the $BaTiO_3$ were changed in lattice constant and amount of OH group release for each sample as shown in each table.

The lattice constant of each sintering inhibiting main ingredient material in the tables was a value calculated as the lattice constant of a cubic crystal from a peak position obtained by measuring a range of the angle of 10 to 85 degrees using an XRD set to a current of 300 mA and an accelerated voltage of 50 kV (Rigaku, Rent 2000) (unit: Å).

Further, the amount of OH group release of the sintering inhibiting main ingredient material in each table is the peak strength of 3510 cm$^{-1}$ due to -OH elastic vibration found by the FT-IR (Fourier transform-infrared spectrography) diffuse reflection method using a simple of about 5 mg of the sintering inhibiting main ingredient material diluted by about 100 mg of KBr.

Next, 20 wt% of the sintering inhibiting dielectric material was added to the conductive material. 5 wt% of a binder and 35 wt% of a solvent were weighed and added to the mixed powder of the conductive material and sintering inhibiting dielectric material. The mixture was kneaded by a ball mill to obtain a slurry and obtain an internal electrode layer paste.

Preparation of Multilayer Ceramic Chip Capacitor Sample

Each obtained dielectric layer paste and internal electrode layer paste were used in the following way to prepare a multilayer ceramic chip capacitor 1 shown in FIG. 1.

First, a PET film was coated with a dielectric layer paste by the doctor blade method to a predetermined thickness and dried so as to form a ceramic green sheet having a thickness of 2 $\mu$m. In this example, this ceramic green sheet was used as a first green sheet. A plurality of these were prepared.

The obtained first green sheet was printed with internal electrode layer paste by the screen printing method in predetermined patterns to obtain a ceramic green sheet having electrodes patterns of a thickness of about 1 $\mu$m. In this example, this ceramic green sheet was used as the second green sheet. A plurality of these were prepared.

The first green sheets were stacked to a thickness of 300 $\mu$m to form a group of green sheets. On this group of green sheets, 11 second green sheets were stacked. A similar group of green sheets was stacked on this and the result hot pressed under conditions of a temperature of 80°C and a pressure of 1 ton/cm$^2$ to obtain a green stack.

Next, the obtained stack was cut to a length of 3.2 mm x width of 1. 6 mm x height of 1.0 mm, then treated to remove the binder, fired, and annealed under the following conditions to obtain a sintered article. A graph showing the temperature changes in the binder removal, firing, and annealing is given in FIG. 2.

The binder removal was performed under conditions of a rate of temperature rise: 30°C/hour, holding temperature T1: 250°C, holding time: 8 hours, rate of temperature reduction: 200°C/hour, and treatment atmosphere: air atmosphere.

The firing was performed under conditions of a rate of temperature rise: 200°C/hour, holding temperature T2: 1240°C, holding time: 2 hours, rate of temperature reduction: 200°C/hour, and treatment atmosphere: reducing atmosphere (oxygen partial pressure of 10$^{-6}$ Pa, prepared by passing mixed gas of $N_2$ and $H_2$ through steam) .

The annealing was performed under conditions of a rate of temperature rise: 200°C/hour, holding temperature T3: 1050°C, holding time: 2 hours, rate of temperature reduction: 200°C/hour, and treatment atmosphere: neutral atmosphere (oxygen partial pressure: 0.1 Pa, prepared by passing $N_2$ gas through steam).

The gas in the firing and annealing was wet using a wetter. The water temperature was 20°C.

The end faces of the obtained sintered article were polished by sandblasting, then were coated with an In-Ga alloy to form test electrodes and obtain a multilayer ceramic chip capacitor sample. The capacitor sample had a size of a length of 3.2 mm x width of 1.6 mm x height of 1.0 mm. The interlayer dielectric layers 2 had a thickness x of about 1.3 $\mu$m, and the internal electrode layers 3 had a thickness of 0.9 $\mu$m. The same procedure was followed to prepare a capacitor sample having interlayer dielectric layers 2 of a thickness x of about 1.1 $\mu$m.

Each obtained capacitor sample was evaluated for the TC bias characteristic, temperature characteristic, and specific dielectric constant $\varepsilon$. However, the capacitor sample having interlayer dielectric layers 2 of a thickness x of about 1.3 $\mu$m was evaluated only for the TC bias characteristic and specific dielectric constant.

The TC bias characteristic was evaluated by measuring the capacitor sample in a thermostatic tank held at 85°C by a digital LCR meter by a 120Hz, 0.5 Vrms, 2 V/$\mu$m bias voltage and calculating the rate of change of capacitance from the value measured at 20°C while not applying a bias voltage. The evaluation criteria was larger than -23% as "good" at a dielectric thickness of 1.3 $\mu$m and larger than -25% at a dielectric thickness of 1.1 $\mu$m as "good".

The temperature characteristic (TC) was evaluated by measuring the capacitor sample in a 85°C thermostatic tank by an LCR meter by 120Hz, 0.5 Vrms, 0.5 V/$\mu$m and calculating the rate of change of capacitance from the value measured at 20°C. The evaluation criteria was larger than -7.0% as "good".

The specific dielectric constant $\varepsilon$ was calculated from the electrostatic capacity of the capacitor sample measured at a reference temperature of 25°C by a digital LCR meter (YHP 4274A) under conditions of a frequency of 1 kHz and an input signal level (measurement voltage) of 1.0 Vrms (no unit). The evaluation criteria was 1800 or more at a dielectric thickness of 1.3 $\mu$m as "good" and 1700 or more at a dielectric thickness of 1.1 $\mu$m as "good".

The results are shown in Tables 1 to 2.

Table 1

| Sample no. | | BaTiO$_3$ included in internal electrode layer paste | | TC bias characteristic (%) | $\varepsilon$ |
|---|---|---|---|---|---|
| | | Lattice constant (Å) | Amount of OH group release | | |
| 1 | Comp. ex. | *3.991* | *10* | -17.1 | *1720* |
| 2 | Ex. | 4.019 | 28 | -17.8 | 1800 |
| 3 | Ex. | 4.011 | 42 | -20.0 | 1903 |
| 4 | Ex. | 4.018 | 68 | -19.2 | 1962 |

(continued)

| Sample no. | | BaTiO$_3$ included in internal electrode layer paste | | TC bias characteristic (%) | $\varepsilon$ |
|---|---|---|---|---|---|
| | | Lattice constant (Å) | Amount of OH group release | | |
| 5 | Ex. | 4.036 | 114 | -21.0 | 1850 |
| 6 | Ex. | 4.046 | 220 | -22.1 | 1920 |
| 7 | Comp. ex. | 4.064 | 266 | -23.5 | 1750 |
| Thickness x of interlayer dielectric layer = 1.3 $\mu$m. | | | | | |

As shown in Table 1, in the Sample 1 of the capacitor sample having an interlayer dielectric layer thickness of 1.3 $\mu$m where the sintering inhibiting main ingredient material comprised of BaTiO$_3$ had a lattice constant of 3.991Å or less, the TC bias characteristic was a good value, but the specific dielectric constant $\varepsilon$ was inferior. In the Sample 7 having a lattice constant of 4.064Å or more, both the TC bias characteristic and $\varepsilon$ were inferior. As opposed to this, in the Samples 2 to 6 having lattice constants of over 3.991Å to less than 4.064Å in the scope of the present invention, it could be confirmed that the $\varepsilon$'s and the TC bias characteristics were also superior.

In the Sample 1 having an amount of OH group release of BaTiO$_3$ of less than 10, the TC bias characteristic was a good value, but the specific dielectric constant $\varepsilon$ was inferior. In the Sample 7 having an amount of OH group release of 266 or more, both the TC bias characteristic and $\varepsilon$ were inferior. As opposed to this, in the Samples 2 to 6 having amount of OH group releases of over 10 to less than 266 in the scope of the present invention, it could be confirmed that the $\varepsilon$'s and the TC bias characteristics were also superior.

Particularly, in the Samples 2 to 4, the TC bias characteristics were -20% or more. It could be confirmed that the characteristics were greatly improved.

Table 2

| Sample no. | | BaTiO$_3$ included in internal electrode layer paste | | TC bias characteristic (%) | TC (%) | $\varepsilon$ |
|---|---|---|---|---|---|---|
| | | Lattice constant (Å) | Amount of OH group release | | | |
| 8 | Comp. ex. | 3.985 | 10 | -16.2 | -4.8 | 1400 |
| 9 | Ex. | 4.019 | 28 | -20.2 | -5.5 | 1730 |
| 10 | Ex. | 4.024 | 98 | -22.3 | -5.6 | 2063 |
| 11 | Ex. | 4.011 | 42 | -23.3 | -5.7 | 2115 |
| 12-1 | Ex. | 4.029 | 60 | -23.6 | -6.1 | 1950 |
| 12 | Ex. | 4.029 | 110 | -24.1 | -6.6 | 1725 |
| 13 | Comp. ex. | 4.064 | 266 | -25.8 | -7.2 | 1590 |
| Thickness x of interlayer dielectric layer = 1.1 $\mu$m. | | | | | | |

As shown in Table 2, in the Sample 8 of the capacitor sample having an interlayer dielectric layer thickness of 1.1 $\mu$m where the sintering inhibiting main ingredient material comprised of BaTiO$_3$ had a lattice constant of 3.991Å or less, the TC bias characteristic and temperature characteristic TC were both good values, but the specific dielectric constant $\varepsilon$ was inferior. In the Sample 13 having a lattice constant of 4.064Å or more, all of the TC bias characteristic, temperature characteristic TC, and $\varepsilon$ were inferior. As opposed to this, in the Samples 9 to 13 having a lattice constant of over 3.991Å to less than 4.064Å in the scope of the present invention, it could be confirmed that the $\varepsilon$ and the TC bias characteristic and temperature characteristic TC were all superior.

In the Sample 8 having an amount of OH group release of BaTiO$_3$ of 10 or less, the TC bias characteristic and temperature characteristic TC were both good values, but the specific dielectric constant $\varepsilon$ was inferior. In the Sample 13 having an amount of OH group release of 266 or more, both the TC bias characteristic and temperature characteristic TC and $\varepsilon$ were inferior. As opposed to this, in the Samples 9 to 12 having amount of OH group releases of over 10 to less than 266 in the scope of the present invention, it was confirmed that the $\varepsilon$ and the TC bias characteristic and temperature characteristic TC were all superior.

Example 2

Except for changing the interlayer dielectric layers 2 in thickness to 1.9 $\mu$m, 1.7 $\mu$m, 1.5 $\mu$m, and 0.9 $\mu$m, the same procedure was followed as in Example 1 to prepare capacitor samples which were similarly evaluated. As a result, similar effects were obtained.

Comparative Example 1

Except for changing the interlayer dielectric layers 2 in thickness to 2.0 $\mu$m and 2.2$\mu$m, the same procedure was followed as in Example 1 to prepare capacitor samples which were similarly evaluated.
As a result, when the interlayer dielectric layers 2 have a thickness of 2 $\mu$m or more, the sintering inhibiting dielectric material has little effect, so almost no particle growth of the dielectric layers could be seen and almost no difference could be recognized in the average particle size of the dielectric particles of the interlayer dielectric layers 2 due to the ceramic particles (sintering inhibiting dielectric material) in the internal electrode layers.

Example 21

Except for the following, the same procedure was followed as in Example 1 to prepare a multilayer ceramic capacitor which was evaluated for characteristics as shown below.

Preparation of Dielectric Layer Paste

The dielectric paste dielectric material was produced by wet mixing into a main ingredient material comprised of barium titanate having an average particle size of about 0.2 $\mu$m (specifically barium titanate of the formula $(BaO)_m \cdot TiO_2$ wherein the molar ratio m is 0.990 to 1.035) a sub ingredient material comprised of $MnCO_3$: 0.2 mol%, MgO: 0.5 mol%, $V_2O_5$: 0.3 mol%, $Y_2O_3$: 2 mol%, $CaCO_3$: 3 mol%, $BaCO_3$: 3 mol%, and $SiO_2$: 3 mol% by a ball mill for 16 hours and drying it.
Next, 10 wt% of binder, 5 wt% of plasticizer, and 150 wt% of solvent were weighed and kneaded with a dielectric paste dielectric material by a ball mill to obtain a slurry and obtain a dielectric layer paste.

Preparation of Internal Electrode Layer Paste

A conductive material comprised of Ni particles having an average particle size of 0.2 $\mu$m, a sintering inhibiting dielectric material, a binder comprised of an ethyl cellulose resin, and a solvent comprised of terpineol were prepared.
As the sintering inhibiting dielectric material, one including a sintering inhibiting main ingredient material comprised of barium titanate (specifically, barium titanate of the formula $(BaO)_{m'} \cdot TiO_2$, that is, $Ba_{m'} TiO_{2+m'}$) and a sintering inhibiting sub ingredient material comprised of $MnCO_3$, MgO, $V_2O_5$, $Y_2O_3$, $CaCO_3$, $BaCO_3$, and $SiO_2$ was used. Here, the sintering inhibiting main ingredient material comprised of the barium titanate was changed in molar ratio m' in the formula, ignition loss, and lattice constant for each sample, as shown in Table 3.
Note that the value of the ignition loss of the sintering inhibiting main ingredient material in each table is the value of the rate of change of weight (unit: %) in 200°C to 1200°C (10 minutes) in range during heat treatment when heating the barium titanate of the sintering inhibiting main ingredient material powder in the air by a rate of temperature rise of 300°C/hour from room temperature to 1200°C and holding at 1200°C for 10 minutes. In each table, when for example "-5.00%" is indicated, this shows that, when the weight at heating at 200°C is 100, the weight after heating at 1200°C for 10 minutes has become 95 or has dropped 5.00%. The calculation formula is shown below.
$$\text{Rate of change of weight} = ((W_{after} - W_{before}) / W_{before}) \times 100$$

where, $W_{after}$: weight after heat treatment of 1200°C for 10 minutes,
$W_{before}$: weight at heating of 200°C.
Next, 20 wt% of sintering inhibiting dielectric material was added to the conductive material. 5 wt% of binder and 35 wt% of solvent were weighed and added to the mixed powder of the conductive material and sintering inhibiting dielectric material, then the result was kneaded by a ball mill to obtain a slurry to obtain the internal electrode layer paste.

Preparation of Multilayer Ceramic Chip Capacitor Sample

The obtained dielectric layer paste and internal electrode layer paste were used in the following way to prepare a multilayer ceramic chip capacitor 1 shown in FIG. 1.

First, a PET film was coated with a dielectric layer paste by the doctor blade method to a predetermined thickness and dried so as to form a ceramic green sheet having a thickness of 2 $\mu$m. In this example, this ceramic green sheet was used as a first green sheet. A plurality of these were prepared.

The obtained first green sheet was printed with internal electrode layer paste by the screen printing method in predetermined patterns to obtain a ceramic green sheet having electrodes patterns of a thickness of about 1 $\mu$m. In this example, this ceramic green sheet was used as the second green sheet. A plurality of these were prepared.

The first green sheets were stacked to a thickness of 300 $\mu$m to form a group of green sheets. On this group of green sheets, 11 second green sheets were stacked. A similar group of green sheets was stacked on this and the result hot pressed under conditions of a temperature of 80°C and a pressure of 1 ton/cm$^2$ to obtain a green stack.

Next, the obtained stack was cut to a length of 3.2 mm x width of 1.6 mm x height of 1.0 mm, then treated to remove the binder, fired, and annealed under the following conditions to obtain a sintered article. A graph showing the temperature changes in the binder removal, firing, and annealing is given in FIG. 2.

The binder removal was performed under conditions of a rate of temperature rise: 30°C/hour, holding temperature T1: 260°C, holding time: 8 hours, rate of temperature reduction: 200°C/hour, and treatment atmosphere: air atmosphere.

The firing was performed under conditions of a rate of temperature rise: 200°C/hour, holding.temperature T2: see table, holding time: 2 hours, rate of temperature reduction: 200°C/hour, and treatment atmosphere: reducing atmosphere (oxygen partial pressure of 10$^{-6}$ Pa, prepared by passing mixed gas of N$_2$ and H$_2$ through steam).

The annealing was performed under conditions of a rate of temperature rise: 200°C/hour, holding temperature T3: 1050°C, holding time: 2 hours, rate of temperature reduction: 200°C/hour, and treatment atmosphere: neutral atmosphere (oxygen partial pressure: 0.1 Pa, prepared by passing N$_2$ gas through steam).

The gas in the firing and annealing was wet using a wetter. The water temperature was 20°C.

The end faces of the obtained sintered article were polished by sandblasting, then were coated with an In-Ga alloy to form test electrodes and obtain a multilayer ceramic chip capacitor sample. The capacitor sample had a size of a length of 3.2 mm x width of 1.6 mm x height of 1.0 mm. The interlayer dielectric layers 2 had a thickness x of about 1.1 $\mu$m, and the internal electrode layers 3 had a thickness of 0.9 $\mu$m.

The obtained capacitor sample was evaluated for the TC bias characteristic, the DC insulation breakdown strength, the short-circuit defect rate, and the specific dielectric constant $\varepsilon$.

The TC bias characteristic was evaluated by measuring the capacitor sample in a thermostatic tank held at 85°C by a digital LCR meter (YHP 4274A) by a 120Hz, 0.5 Vrms, 2 V/$\mu$m bias voltage and calculating the rate of change of capacitance from the value measured at 20°C while not applying a bias voltage. The evaluation criterion was over -20% as "good".

The DC insulation breakdown strength was found by applying a DC voltage to the capacitor sample at a rate of temperature rise of 50V/sec, measuring the voltage at the time of detection of the leakage current of 0.1 mA (DC breakdown voltage VB, unit: V/$\mu$m), and calculating the average value. The evaluation criterion was 65V/$\mu$m or more as "good".

The short-circuit defect rate was found by measuring the resistance of 100 capacitor samples using an insulation resistance meter (HP E2377 Multimeter) at 25°C, finding the number of samples with obtained resistance values of 10$\Omega$ or less as short-circuit defects, and calculating the percentage (%) with respect to the total number. The evaluation criterion was 50% or less as "good".

The specific dielectric constant $\varepsilon$ was calculated from the electrostatic capacity of the capacitor sample measured at a reference temperature of 25°C by a digital LCR meter (YHP 4274A) under conditions of a frequency of 1 kHz and an input signal level (measurement voltage) of 1.0 Vrms (no unit) . The evaluation criterion was 1600 or more as "good". The results are shown in Table 3.

Table 3

| Sample | Additive main ingredient material (BaTiO$_3$) | | | Firing temp. T2 (°C) | TC bias char. (%) | VB (V/ μm) | Short-circuit defect rate (%) | ε | JudgMent |
|---|---|---|---|---|---|---|---|---|---|
| | A/B | Ignition loss (%) | Lattice constant (Å) | | | | | | |
| *21 | 1.003 | -3.81 | *4.055* | 1240 | *-20.7* | 53 | 55 | 1957 | Poor |
| 22 | 1.003 | -3.81 | 4.039 | 1240 | -19.8 | 78 | 50 | 1950 | Good |
| 23 | 1.003 | -3.81 | 4.027 | 1240 | -19.7 | 81 | 42 | 1823 | Good |
| 24 | 1.003 | -3.81 | 4.015 | 1240 | -18.5 | 82 | 35 | 1620 | Good |
| *25 | 1.003 | -3.80 | *3.998* | 1240 | -20.5 | *59* | *74* | 1830 | Poor |
| *26 | *0.993* | -4.10 | 4.019 | 1240 | *-20.8* | 58 | 53 | 1930 | Poor |
| 27 | 0.995 | -4.10 | 4.019 | 1240 | -19.8 | 65 | 48 | 1910 | Good |
| 28 | 0.997 | -4.10 | 4.019 | 1240 | -19.5 | 67 | 45 | 1875 | Good |
| 29 | 1.000 | -4.10 | 4.019 | 1240 | -19.3 | 69 | 43 | 1840 | Good |
| 30 | 1.005 | -4.10 | 4.019 | 1240 | -19.1 | 72 | 40 | 1810 | Good |
| 31 | 1.012 | -4.10 | 4.019 | 1240 | -19.1 | 85 | 20 | 1745 | Good |
| 32 | 1.020 | -4.10 | 4.019 | 1240 | -18.8 | 89 | 15 | 1700 | Good |
| 33 | 1.035 | -4.10 | 4.019 | 1240 | -18.3 | 80 | 30 | 1650 | Good |
| *34* | *1.050* | -4.10 | 4.019 | 1240 | - | - | - | - | Poor (insufficient sintering) |
| *35 | 1.008 | -6.15 | 4.018 | 1240 | *-21.3* | 64 | 36 | 1930 | Poor |
| 36 | 1.008 | -6.00 | 4.018 | 1240 | -19.9 | 75 | 35 | 1920 | Good |
| 37 | 1.008 | -5.00 | 4.018 | 1240 | -19.6 | 74 | 33 | 1920 | Good |
| 38 | 1.008 | -4.10 | 4.018 | 1240 | -19.3 | 76 | 31 | 1910 | Good |
| 39 | 1.008 | -3.45 | 4.018 | 1240 | -19.0 | 75 | 32 | 1955 | Good |
| 40 | 1.008 | -2.95 | 4.018 | 1240 | -18.8 | 78 | 28 | 1951 | Good |
| 41 | 1.008 | -2.10 | 4.018 | 1240 | -18.6 | 81 | 25 | 1946 | Good |

In the table, "*" indicate comparative examples.
Thickness x of interlayer dielectric layer = 1.1 μm.

As shown in Table 3, among the capacitor samples having interlayer dielectric layer thicknesses x of 1.1 μm, in the Sample 25 having a lattice constant of barium titanate of the formula $(BaO)_{m'} \cdot TiO_2$ as a sintering inhibiting main ingredient material of 3.998Å or less and the Sample 21 having a lattice constant of 4.055Å or more, the ε's were good values, but the TC bias characteristics, VB's, and the short-circuit defect rates were all inferior. As opposed to this, in the Samples 22 to 24 having lattice constants of over 3.998Å to less than 4.055Å in the scope of the present invention, it could be confirmed that the ε's and the TC bias characteristics, VB's, and the short-circuit defect rates were all superior. Particularly, in the Samples 22 to 24, the TC bias characteristics were -20% or more. It could be confirmed that these characteristics were greatly improved.

In the Sample 26 having a molar ratio m' of barium titanate of 0.993 or less, the ε was a good value, but all of the TC bias characteristic, VB, and short-circuit defect rate were inferior. In the Sample 34 having a molar ratio m' of 1.050 or more, the firing temperature was low and the sintering insufficient, so the sample could not be evaluated. As opposed to this, in the Samples 27 to 33 having molar ratios m' of over to 0.993 to less than 1.050 in the scope of the present invention, it could be confirmed that all of the specific dielectric constant ε and TC bias characteristic, DC breakdown voltage VB, and short-circuit defect rate were superior.

In the Sample 35 having an ignition loss of barium titanate of 6.15% or more, the ε and the short-circuit defect rate were good values, but the VB and the TC bias characteristic were inferior. As opposed to this, in the Samples 36 to 41 having an ignition loss of less than 6.15% in the scope of the present invention, it could be confirmed that the ε and the TC bias characteristic, VB, and short-circuit defect rate were all superior.

Example 22

Except for changing the thickness x of the interlayer dielectric layers 2 to 1.9 $\mu$m, 1.5 $\mu$m, and 0.9 $\mu$m, the same procedure was followed as in Example 21 to prepare capacitor samples which were evaluated in the same way. As a result, similar results were obtained.

Comparative Example 21

Except for changing the thickness x of the interlayer dielectric layers 2 to 2.0 $\mu$m and 2.2 $\mu$m, the same procedure was followed as in Example 1 to prepare capacitor samples which were evaluated in the same way. As a result, when the interlayer dielectric layers 2 had a thickness or 2 $\mu$m or more, the effect of the sintering inhibiting dielectric material was small, so almost no particle growth of the dielectric layers was seen and almost no difference could be observed in average particles of the dielectric particles of the interlayer dielectric layers 2 by ceramic particles in the internal electrode layers (sintering inhibiting dielectric material).

**Claims**

1. A method of production of a multilayer ceramic electronic device having internal electrode layers and dielectric layers having thicknesses of less than 2 $\mu$m,
said method of production of a multilayer ceramic electronic device having a step of firing a stack formed using a dielectric layer paste including a dielectric paste dielectric material and an internal electrode layer paste including a sintering inhibiting dielectric material,
said dielectric paste dielectric material including a main ingredient material and sub ingredient material,
said sintering inhibiting dielectric material including at least a sintering inhibiting main ingredient material,
said sintering inhibiting main ingredient material being substantially the same in composition as the main ingredient material included in said dielectric paste dielectric material and having a lattice constant over 3.991Å and less than 4.064Å.

2. The method of production of a multilayer ceramic electronic device as set forth in claim 1, wherein said sintering inhibiting main ingredient material is a dielectric oxide expressed by the formula $(AO)_{m'} \cdot BO_2$ wherein the symbol A in said formula is at least one element selected from Sr, Ca, and Ba, the symbol B is at least one element of Ti and Zr, and a molar ratio m' is 0.993<m'<1.050 and having a lattice constant of over 3.991Å to less than 4.064Å.

3. The method of production of a multilayer ceramic electronic device as set forth in claim 1, wherein said sintering inhibiting main ingredient material is barium titanate of the formula $(BaO)_{m'} \cdot TiO_2$ wherein the molar ratio m' is 0.993<m'<1.050 and having a lattice constant of over 3.991Å to less than 4.064Å.

4. The method of production of a multilayer ceramic electronic device as set forth in any one of claims 1 to 3, wherein said sintering inhibiting main ingredient material further has an amount of OH group release of over 10 to less than 266.

5. A method of production of a multilayer ceramic electronic device having internal electrode layers and dielectric layers having thicknesses of less than 2 $\mu$m,
said method of production of a multilayer ceramic electronic device having a step of firing a stack formed using a dielectric layer paste including a dielectric paste dielectric material and an internal electrode layer paste including a sintering inhibiting dielectric material,
said dielectric paste dielectric material including a main ingredient material and sub ingredient material,
said sintering inhibiting dielectric material including at least a sintering inhibiting main ingredient material, and
said sintering inhibiting main ingredient material being substantially the same in composition as the main ingredient material included in said dielectric paste dielectric material and having an amount of OH group release of over 10 to less than 266.

6. The method of production of a multilayer ceramic electronic device as set forth in claim 5, wherein said sintering inhibiting main ingredient material is a dielectric oxide of the formula $(AO)_{m'} \cdot BO_2$ wherein the symbol A in said formula is at least one element selected from Sr, Ca, and Ba, the symbol B is at least one element of Ti and Zr, and a molar ratio m' is 0.993<m'<1.050 and having an amount of OH group release of over 10 to less than 266.

7. The method of production of a multilayer ceramic electronic device as set forth in claim 5, wherein said sintering inhibiting main ingredient material is barium titanate of the formula $(BaO)_{m'} \cdot TiO_2$ wherein the molar ratio m' is 0.993<m'<1.050 and having an OH release of over 10 to less than 266.

8. The method of production of a multilayer ceramic electronic device as set forth in any one of claims 5 to 7, wherein said sintering inhibiting main ingredient material has a lattice constant of over 3.991Å to less than 4.064Å.

9. A method of production of a multilayer ceramic electronic device having internal electrode layers and dielectric layers having thicknesses of less than 2 μm,
said method of production of a multilayer ceramic electronic device having a step of firing a stack formed using a dielectric layer paste including a dielectric paste dielectric material and an internal electrode layer paste including a sintering inhibiting dielectric material; said dielectric paste dielectric material including a main ingredient material and sub ingredient material,
said sintering inhibiting dielectric material including at least a sintering inhibiting main ingredient material, and said sintering inhibiting main ingredient material being substantially the same in composition as the main ingredient material included in said dielectric paste dielectric material and having a lattice constant of over 3.991Å to less than 4.064Å and an amount of OH group release of over 10 to less than 266.

10. The method of production of a multilayer ceramic electronic device as set forth in claim 9, wherein said sintering inhibiting main ingredient material is a dielectric oxide of the formula $(AO)_{m'} \cdot BO_2$ wherein the symbol A is at least one element selected from Sr, Ca, and Ba, the symbol B is at least one element of Ti and Zr, and a molar ratio m' is 0.993<m'<1.050, and having a lattice constant of over 3.991Å to less than 4.064Å and an amount of OH group release of over 10 to less than 266.

11. The method of production of a multilayer ceramic electronic device as set forth in claim 9, wherein said sintering inhibiting main ingredient material is barium titanate of the formula $(BaO)_{m'} \cdot TiO_2$ wherein the molar ratio m' is 0.993<m'<1.050, and having a lattice constant of over 3.991Å to less than 4.064Å and an amount of OH group release of over 10 to less than 266.

12. A method of production of a multilayer ceramic electronic device having internal electrode layers and dielectric layers having thicknesses of less than 2 μm,
said method of production of a multilayer ceramic electronic device having a step of firing a stack formed using a dielectric layer paste including a dielectric paste dielectric material and an internal electrode layer paste including a sintering inhibiting dielectric material,
said dielectric paste dielectric material including a main ingredient material and sub ingredient material,
said main ingredient material being a dielectric oxide of the formula $(AO)_m \cdot BO_2$ wherein the symbol A in said formula is at least one element selected from Sr, Ca, and Ba, the symbol B is at least one element of Ti and Zr, and a molar ratio m is m=0.990 to 1.035,
said sintering inhibiting dielectric material including at least a sintering inhibiting main ingredient material, and said sintering inhibiting main ingredient material being a dielectric oxide of the formula $(AO)_{m'} \cdot BO_2$ wherein the symbol A in said formula is at least one element selected from Sr, Ca, and Ba, the symbol B is at least one element of Ti and Zr, and a molar ratio m' is 0.993<m'<1.050, and having an ignition loss of less than 6.15% and a lattice constant of over 3.998Å to less than 4.055Å.

13. A method of production of a multilayer ceramic electronic device having internal electrode layers and dielectric layers having thicknesses of less than 2 μm,
said method of production of a multilayer ceramic electronic device having a step of firing a stack formed using a dielectric layer paste including a dielectric paste dielectric material and an internal electrode layer paste including a sintering inhibiting dielectric material,
said dielectric paste dielectric material including a main ingredient material and sub ingredient material,
said main ingredient material being barium titanate of the formula $(BaO)_m \cdot TiO_2$ wherein the molar ratio m is m=0.990 to 1.035,
said sintering inhibiting dielectric material including at least a sintering inhibiting main ingredient material, and said sintering inhibiting main ingredient material being barium titanate of the formula $(BaO)_m \cdot TiO_2$ wherein the molar ratio m' is 0.993<m'<1.050, and having an ignition loss of less than 6.15% and a lattice constant of over 3.998Å to less than 4.055Å.

# FIG.1

## FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5062855 A
- JP 2000277369 A
- JP 2001307939 A
- JP 2003077761 A
- JP 2003100544 A
- JP 2003124049 A